# EUROPÄISCHE PATENTSCHRIFT

(11) **EP 3 717 975 B1**
(45) Veröffentlichungstag und Bekanntmachung des Hinweises auf die Patenterteilung: **23.10.2024**
(21) Anmeldenummer: 17817669.9
(22) Anmeldetag: 27.11.2017
(51) Int. Cl.: G05B 17/02, G05B 19/042, G05B 19/418

(54) **VERFAHREN UND VORRICHTUNG ZUR PROJEKTIERUNG EINER SPEZIFI-SCHEN VERFAHRENSTECHNISCHEN ANLAGE**
METHOD AND DEVICE FOR PLANNING A SPECIFIC PROCESS ENGINEERING PLANT
PROCÉDÉ ET DISPOSITIF DE PLANIFICATION D'UNE INSTALLATION D'INGÉNIERIE DE PROCESSUS SPÉCIFIQUE

(43) Veröffentlichungstag der Anmeldung: 07.10.2020
(73) Patentinhaber: Siemens Aktiengesellschaft, 80333 München (DE)
(72) Erfinder: GEIGER, Andreas, 76751 Jockgrim (DE); WENDELBERGER, Klaus, 68789 St. Leon-Rot (DE)
(74) Vertreter: Siemens Patent Attorneys
(86) Internationale Anmeldenummer: PCT/EP2017/080538
(87) Internationale Veröffentlichungsnummer: WO 2019/101345

(56) Entgegenhaltungen:
- EP-A1- 2 827 203
- EP-A2- 3 029 535
- WO-A1-2009/103089
- WO-A1-2017/076420
- US-A1- 2006 009 866
- HOWLE: "Computer Interpretation of Process and Instrumentation Drawings", 1 February 1995 (1995-02-01), XP055276699, Retrieved from the Internet <URL:http://cife.stanford.edu/sites/default/files/WP037.pdf> [retrieved on 20160531]

## Beschreibung

Die Erfindung betrifft ein Verfahren und eine Vorrichtung zur Projektierung einer spezifischen verfahrenstechnischen Anlage. Der Begriff Anlage subsumiert auch Teilanlage als Teil einer größeren Anlage.

Bei einer verfahrenstechnischen Anlage kann zwischen Primärtechnik und Sekundärtechnik unterschieden werden.

Die Primärtechnik umfasst den Aufbau der Anlage aus verfahrenstechnischer oder technologischer Sicht, also die verfahrenstechnischen Komponenten der Anlage, wie z. B. Behälter, Pumpen, Ventile, Wärmetauscher und ihre Verbindung miteinander, insbesondere Rohrleitungen.

Die Planung oder Projektierung der Primärtechnik erfolgt mittels eines Anlagenplanungswerkzeugs (z. B. COMOS von Siemens) in Form eines Fließ- oder Rohrleitungsschemas (R&I-Schema - Rohrleitungs- und Instrumentenschema) der Anlage, wobei grafische Prozessobjekte, die Komponenten der verfahrenstechnischen Anlage repräsentieren, miteinander verknüpft werden. Die konkreten Prozessobjekte (Instanzen von Objektklassen) enthalten technische Informationen über die Parameter der von ihnen repräsentierten Komponenten, wie z. B. Rohrleitungsdurchmesser, Leistungsaufnahme von Motoren oder das Füllvolumen eines Behälters. Das R&I-Schema kann auch bereits die Sensorik und Aktorik (Messumformer und Antriebe für Stellorgane) der Anlage mit den technischen Informationen über die Sensoren und Aktoren enthalten bzw. die entsprechenden Informationen können in dem Anlagenplanungswerkzeug eingegeben werden.

Die Sekundärtechnik ertüchtigt die Primärtechnik zum bestimmungsgemäßen Betrieb der Anlage, wobei unterschiedliche Sekundärtechniken unterschiedliche Funktionen beim Betrieb der Anlage erfüllen.

Eine wesentliche Sekundärtechnik stellt die Automatisierung der Anlage dar, die wiederum in unterschiedliche Teilbereiche wie Automatisierungs-Software, Automatisierungs-Hardware, Bedienen & Beobachten unterteilt werden kann, deren Lösungen bisher oft von unterschiedlichen Fachleuten (Automatisierungs-Ingenieure, Projekteure) wie Hardware-Ingenieur, Software-Ingenieur, HMI- (Human Machine Interface-) Ingenieur projektiert wurden.

Neben der Automatisierung ist die Elektrifizierung der Anlage als weitere Sekundärtechnik von Bedeutung. Alle elektrischen Anlagenkomponenten wie insbesondere die Motoren müssen mit elektrischem Strom versorgt werden. Hierzu sind die Komponenten der Elektrifizierung wie Transformatoren, Umrichter, Schaltanlagen usw. bereitzustellen.

Als weitere Sekundärtechniken sind z. B. die Gebäudetechnik oder die Telekommunikation zu nennen.

Basis für das Engineering der Automatisierung und Elektrifizierung ist die verfahrenstechnische Anlagenplanung, wobei moderne Anlagenplanungswerkzeuge wie das oben erwähnte Planungswerkzeug COMOS das integrierte Engineering sowohl der primärtechnischen als auch sekundärtechnischen Lösungen (also die verfahrenstechnische Anlagenplanung und, z. B. die Automatisierung) in einem Werkzeug bzw. einer Systemumgebung ermöglichen, so dass Daten, die für verschiedene Lösungen benötigt werden, nur einmal eingegeben werden müssen und jederzeit in konsistenter Art und Weise vorliegen.

Eine effiziente Methode, den Aufwand bei der Projektierung bzw. Erstellung von Projektierungsunterlagen wie z. B. Funktionsplänen von Steuerungen und Regelungen oder Bedienbildern zu senken und die Qualität zu verbessern, ist die Standardisierung, wobei Standards erzeugt werden, die in den verschiedenen Projekten immer wieder eingesetzt werden. Idealerweise liegen die Standards in verschiedenen Varianten vor, so dass sie auf die Anforderungen der spezifischen Anlage angepasst werden können. Im Engineering müssen dann nur die passenden Standards in der entsprechenden Variante ausgewählt und angewendet werden. Wenn durch die Standardisierung auch nicht das komplette Engineering abgedeckt werden kann, da nicht alle spezifischen Anlagenanforderungen oder speziellen Kundenwünsche in einen Standard gegossen werden können, so lässt sich doch ein Großteil des Engineering - speziell von den Teilen, die von Anlage zu Anlage immer wieder gleich sind - erheblich vereinfachen.

Eine weitere Methode zur Aufwandsreduktion bei der Projektierung von Lösungen im Bereich der Sekundärtechniken ist die Automatisierung der Tätigkeiten in der Projektierung. Auf Basis entsprechender Algorithmen werden dabei die Projektierungslösungen unter Verwendung der Daten aus der Anlagenplanung automatisch erzeugt.

Sind beispielsweise in einem R&I-Schema bereits die Sensoren und Aktoren der Anlage mit den für die Automatisierung relevanten Parametern wie Messbereichsanfang und -ende, Anschlussart (z. B. Bus, verdrahtet), Antriebstyp (elektrisch, pneumatisch, hydraulisch) enthalten, liegen alle notwendigen Informationen vor, um die Software für das Einlesen von Messsignalen und die Ausgabe von Stellsignalen automatisch generieren zu können.

Dies gilt jedoch nicht für höherwertige Automatisierungsfunktionen zur Regelung, Steuerung, Verriegelung oder zum Schutz der Anlage, weil die dafür benötigten Informationen, nicht an einer einzelnen Anlagenkomponente festgemacht werden können, sondern vom Aufbau der Anlage und ihrem bestimmungsgemäßen Betrieb, also dem verfahrenstechnischen Zweck, den die Anlage erfüllen soll, abhängig sind. Zusätzlich können für die Automatisierung aufgrund anderer betrieblicher Anforderungen unterschiedliche Automatisierungslösungen erforderlich sein, auch wenn zwei Anlagen den gleichen verfahrenstechnischen Aufbau haben, d.h. durch das gleiche R&I-Schema beschrieben sind.

Eine automatische Erzeugung einer Projektierungslösung ist letztlich nur möglich, wenn alle Informationen, von denen die Projektierungslösung abhängt, in einer maschinenlesbaren Form vorliegen. Zur automatischen Generierung von Projektierungslösungen für die verschiedenen Sekundärtechniken müssen daher neben der Information über den verfahrenstechnischen Aufbau der Anlage, die in einem R&I beschrieben ist, noch Informationen vorliegen über den gewünschten automatischen Anlagenbetrieb (z. B. im Automatikbetrieb verfügbare Betriebsarten einzelner Komponenten aber auch der Gesamtanlage, erforderliche automatische Schutzmechanismen, automatische Betriebsoptimierung, dynamisches Anlagenverhalten), den gewünschten manuellen Anlagenbetrieb (z. B. Informationsbereitstellung für den Anlagenfahrer, zur Verfügung stehende Eingriffsmöglichkeiten für den Anlagenfahrer), die anlagenspezifischen Rahmenbedingungen (z. B. räumliche Gegebenheiten, Entfernungen) und die Kundenspezifikation (z. B. einzusetzende Produkte, Eigenschaften der zu verwendenden Produkte).

Aus der EP 2 671 122 B1 ist für den Bereich der Automatisierung ein Verfahren bekannt, Projektierungsunterlagen automatisiert zu generieren, wobei ein Projekteur Varianten-Definitionslisten erstellt, in denen er angibt, welcher spezifische Aufbau der zu automatisierenden verfahrenstechnischen Anlage vorliegt und welche kundenspezifischen Anforderungen zu erfüllen sind. Die Eingabe in die Varianten-Definitionslisten erfolgt durch Beantwortung von ja/nein-Fragen oder Eingabe von Zahlenwerten. Auf dieser Basis wird dann aus einer Datenbank, welche aus miteinander verknüpften, anpassbaren Projektierungsobjekten bestehende Standard-Projektierungsunterlagen jeweils als Maximalvariante enthält, eine passende Variante der Standard-Projektierungsunterlage ausgewählt und aus dieser unter Anpassung (z. B. Löschen oder Abschalten) ihrer Projektierungsobjekte die anlagenspezifischen Projektierungsunterlage automatisch erzeugt. Eine Projektierungsunterlage kann ein Regelungs- oder Steuerungsfunktionsplan, ein Bedienbild für die Anlage oder eine Beschreibung der Anlage oder Anlagenfunktionalität sein.

Aus der EP 2 795 414 B1 ist ein Verfahren bekannt, bei dem aus einer Referenz-Projektierungsunterlage einer technischen Anlage eine anlagenspezifische Projektierungsunterlage automatisch erzeugt wird. Dabei kann ein Abgleich von Standard-Projektierungsobjekten mit der Referenz-Projektierungsunterlage automatisiert durchgeführt werden. Das bekannte Verfahren setzt auf der Referenz-Projektierungsunterlage auf. Die Projektierung der leittechnischen Softwarelösung wurde bei der Erstellung der Referenz-Projektierungsunterlage bereits abgeschlossen. Das Verfahren gibt an, wie diese Unterlage auf automatisierte Art und Weise in das spezifische Automatisierungssystem umgesetzt werden kann.

Aus der EP 0 770 944 B1 ist ein Verfahren zum automatisierten Generieren von leittechnischen Strukturen für eine konkrete leittechnische Aufgabe bekannt. Das bekannte Verfahren setzt auf einem R&I-Schema der Anlage auf, wobei jede dargestellte Komponente der Anlage einen Datensatz besitzt, der ihre Eigenschaften beschreibt. Für die Komponenten, aus ihnen gebildete Baugruppen oder die Anlage sind in einer Wissensbasis allgemeingültig formulierte leittechnische Aufgaben, sog. abstrakte Generixe, unter Angabe von Wirkungsort, Verarbeitung, leittechnischer Bedingung und Zustand der Bedingung zeilenweise erfasst. Zum Generieren der leittechnischen Strukturen für die konkrete Anlage werden für jedes abstrakte Generix Wirkungsorte und leittechnische Bedingungen in dem R&I-Schema gesucht, die der Beschreibung des abstrakten Generix entsprechen. Werden passende Wirkungsorte und leittechnische Bedingungen im R&I-Schema gefunden, wird eine Kopie des abstrakten Generix mit den Informationen zu den tatsächlichen Anlagenkomponenten konkretisiert. Das bekannte Verfahren beruht darauf, dass das abstrakte Wissen in Form der vorformulierten Generixe in ausreichendem Umfang zur Verfügung steht. Es können leittechnische Softwarestrukturen generiert werden, die von ihrem Grundaufbau her den in den abstrakten Generixen definierten Strukturen entsprechen. Ferner betrachtet das bekannte Verfahren nur eindimensionale Strukturen, weil die Wirkungsorte mit Hilfe der abstrakten Formulierung in den Generixen entlang einer Verfahrensstrecke zwischen einer Start- und Endkomponente in dem R&I-Schema gesucht werden. Mit dem bekannten Verfahren ergibt sich für eine bestimmte Anlagenstruktur immer dieselbe leittechnische Struktur.

Aus der EP 0 770 945 B1 ist die automatisierte Erstellung eines verfahrenstechnischen Schemas (R&I-Schema) für einen konkreten technischen Prozess bekannt, wobei ein abstraktes verfahrenstechnisches Schema mit Platzhaltern für Komponenten und Verbindungen in ein konkretes Schema für den technischen Prozess umgesetzt wird, indem die Platzhalter mit konkreten Komponenten und Verbindungen konkretisiert werden. Die Generierung leittechnischer oder sonstiger Lösungen aus dem Bereich Sekundärtechnik ist nicht Gegenstand des bekannten Verfahrens.

Aus der EP 1 048 993 B1 ist ein Verfahren zur wissensbasierten Planung eines komplexen technischen Systems, z. B. einer technischen Anlage bekannt. In einer ersten Planungsstufe wird die Primärtechnik der Anlage durch Erstellung eines verfahrenstechnischen Schemas (R&I-Schema) nach dem aus der oben erwähnten EP 0 770 945 B1 bekannten Verfahren geplant. In einer auf der Primärtechnik aufbauenden, zweiten Planungsstufe werden eine oder mehrere Sekundärtechniken wie z. B. das Leitsystem, die elektrische Ausrüstung oder die Gebäude geplant. Dabei werden basierend auf der projektierten Primärtechnik, unter Berücksichtigung von zuvor eingegebenen und gespeicherten anlagenweiten Vorgaben der Sekundärtechnik und mittels sekundärtechnik-spezifischem Wissen in Form von Domänen-Regeln, ausführungsneutrale und damit lösungssystemunabhängige sekundärtechnische Planungsergebnisse erarbeitet. Eine solche Domänen-Regel kann beispielsweise lauten: "Jeder Verarbeitungsschritt einer Schrittsteuerung hat eine Startbedingung, eine Überwachungszeit und Weiterschaltbedingung, bzw. eine einheitliche Fehlerbehandlung". Die lösungssystemunabhängigen sekundärtechnischen Planungsergebnisse können zum Zwecke der Weiterverarbeitung, in z. B. einem Planungswerkzeug eines spezifischen Lösungssystems bereitgestellt werden. Das bekannte Verfahren erlaubt daher eine automatisierte Projektierung einer Sekundärtechnik, sofern diese nur von einer verfahrenstechnischen Anlagenplanung und von anlagenweiten Vorgaben der Sekundärtechnik (vordefinierten, sekundärtechnik-spezifischen Regeln) abhängt.

Aus der WO 2017/076420 A1 ist ein Verfahren zur Konfiguration der Automatisierung für eine prozesstechnische Anlage bekannt. Ausgangspunkt ist auch hier das R&I-Schema der Anlage, in dem Repräsentanten der Komponenten der Anlage über Leitungen miteinander verbunden sind. Für die Repräsentanten der Anlagenkomponenten sind Schnittstellen für Verriegelungseigenschaften, die z. B. zum Abschalten der Komponente führen oder ein Einschalten der Komponente verhindern, definiert. Durch Analyse, z. B. Bildverarbeitung, der R&I-Schemata wird für die einzelnen Komponenten ermittelt, mit welchen weiteren Komponenten sie verbunden sind, wobei weiterhin durch Analyse der Schnittstellen, diejenigen der weiteren Komponenten, genauer ihre Repräsentanten, ausgewählt werden, deren Verriegelungseigenschaften für die untersuchten Komponenten relevant sind. Die ausgewählten Repräsentanten der Komponenten werden an ihren Schnittstellen miteinander verbunden, wobei anschließend automatisch eine Ablauflogik für die Automatisierung dieser Komponenten generiert wird. In einer allgemeinen Betrachtung können auch leittechnische Strukturkomponenten, wie z. B. eine Regelungsstruktur, Teil des R&I-Schemas und mit den Anlagenkomponenten verbunden sein. Zur Generierung der Ablauflogik werden diese Strukturkomponenten in analoger Art und Weise wie die Anlagenkomponenten behandelt. Mit dem bekannten Verfahren können somit leittechnische Softwarestrukturen generiert werden, die zunächst in dem Sinne eindimensional sind, dass die Schnittstelle einer Komponente stets nur mit einer Schnittstelle einer anderen Komponente verbunden sein kann. Dabei sind mehrere parallele eindimensionale Strukturen jedoch möglich. Die Generierung von mehrdimensionalen Strukturen, wie z. B. eine mehrfach geschachtelte logische Kombination von Signalen oder Signalverarbeitungen (z. B. mit Zeitgliedern, Grenzwertbildungen) oder Regelungsstrukturen ist unter Einsatz leittechnischer Strukturkomponenten möglich. Es können dann Softwarestrukturen erzeugt werden, die von ihrem Grundaufbau her den Strukturkomponenten entsprechen. Das Wissen muss daher in Form der vorformulierten Strukturkomponenten in ausreichendem Umfang zur Verfügung stehen.

Die EP 2 787 403 A1 beschreibt ein Verfahren zum automatischen Erstellen eines Automatisierungsprogramms aus einer technologischen Beschreibung einer Automatisierungslösung für eine verfahrenstechnische Anlage. Während bisher die technologische Beschreibung und das Automatisierungsprogramm von unterschiedlichen Fachleuten (Technologen, Automatisierungsingenieure) erstellt wurden, muss jetzt nur die technologische Beschreibung erstellt werden, während die Generierung des Automatisierungsprogramms durch ein die technologische Beschreibung verarbeitendes Softwarewerkzeug erfolgt. Die technologische Beschreibung definiert die von der Anlage umfassten technischen Einrichtungen, die Funktionalitäten der Einrichtungen sowie, in Form sogenannter Aktionen und Transitionen, funktionale Zusammenhänge der von der Anlage umfassten technischen Einrichtungen. Die technologische Beschreibung der Automatisierungslösung liegt in einer maschinenlesbaren Form in einem vorgegebenen Format vor und wird automatisch analysiert. Ein solches Format kann zum Beispiel auf der Norm ISA-88 (IEC 61512-1) oder der NAMUR-Empfehlung NE 33 basieren. Zur automatischen Umsetzung der technologischen Beschreibung der Automatisierungslösung werden in einer Programmbibliothek bei der Generierung des Automatisierungsprogramms verwendbare Interpretermodule und Abbildungsregeln zur Umsetzung der technologischen Beschreibung in ein Basisprogramm bereitgestellt. Mit dem bekannten Verfahren können daher Automatisierungsprogramme (leittechnische Softwarelösungen) in Form eines Basisprogramms und aus dem Basisprogramm aufrufbarer Interpretermodule generiert werden. Das Basisprogramm besteht dabei aus einer Abfolge geordneter Datensätze, die feste Strukturen haben, und die Interpretermodule enthalten vordefinierten gerätespezifischen Programmcode. Funktional entspricht das generierte Ablaufprogramm stets einer Abfolge von Aktionen und Transitionen.

Die US 2006/009866 A1 beschreibt ein System und ein Verfahren, bei dem ein Automatisierungscode basierend auf vorhandenen Beschreibungen einer Anlagenstruktur erzeugt wird. Die Komponenten der Anlage werden durch Funktionsmodule dargestellt und verfügen über Ports zur Datenübertragung. Den Funktionsmodulen zugeordnete Signale werden über die Ports übertragen. Den Signalen werden Metainformationen zugewiesen, welche die möglichen Beziehungen zwischen den Komponenten des Automatisierungssystems beschreiben. Der Automatisierungscode wird basierend auf der Konfiguration der Signale automatisch generiert.

In der EP 3 029 535 A2 ist beschrieben, wie aus einem R&I-Schema in einem ersten Schritt die notwendigen Komponenten und Informationen zur Erstellung einer Sekundärtechnik extrahiert und identifiziert werden und anschließend die Beziehungen zwischen den einzelnen Komponenten (oder Gruppen davon) hergestellt werden. Das beschriebene Verfahren umfasst im Einzelnen das Parsen eines R&I Schemas und das Identifizieren von Instrumenten und / oder Gruppen von Instrumenten innerhalb des R&I-Schemas, das Identifizieren eines oder mehrerer zugehöriger Eingabe- und Ausgabe-Tags jedes identifizierten Instruments und / oder mit jeder identifizierten Gruppe von Instrumenten innerhalb des R&I-Schemas und das Herstellen mindestens einer Beziehung zwischen dem einen oder den mehreren Eingabe- und Ausgabe-Tags, wobei die Eingabe- und Ausgabe-Tags für ein Instrument und / oder eine Gruppe von Instrumenten und die mindestens eine Beziehung zwischen den entsprechenden Eingabe-Tags und Ausgabe-Tags aus einer Vorlagenbibliothek abgeleitet werden. Basierend auf den Vorlagen (Templates) und einer Regelbasis werden entsprechende Regelkreise für jede hergestellte Beziehung zwischen den Eingabe-Tags und den Ausgabe-Tags erstellt, wobei der Regelkreis ein oder mehrere Instrumente steuert.

Der Erfindung liegt die Aufgabe zugrunde, ein Verfahren und eine Vorrichtung anzugeben, die ausgehend von der in einem Fließschema projektierten Primärtechnik einer Anlage eine automatische Projektierung einer Sekundärtechnik, wie z. B. Automatisierungs-Software, Automatisierungs-Hardware, Bedienung & Beobachtung, Elektrifizierung ermöglichen.

Gemäß der Erfindung wird die Aufgabe durch das in Anspruch 1 angegebene Verfahren bzw. die in Anspruch 8 angegebene Vorrichtung gelöst.

Bevorzugte Weiterbildungen der Erfindung ergeben sich aus den abhängigen Ansprüchen.

Gegenstand der Erfindung ist somit ein Verfahren zur Projektierung einer spezifischen verfahrenstechnischen Anlage, die aus einer Primärtechnik in Form von miteinander verfahrenstechnisch verbundenen Komponenten der Anlage und mindestens einer von der Primärtechnik abhängigen und zusammen mit dieser einen Betrieb der Anlage ermöglichenden Sekundärtechnik besteht, wobei
- die Primärtechnik projektiert wird, indem mittels eines Anlagenplanungswerkzeugs ein Fließschema der Anlage durch Verknüpfung von die Komponenten der technischen Anlage repräsentierenden grafischen Prozessobjekten erstellt wird,
- mittels des Anlagenplanungswerkzeugs das Fließschema um Konfigurationsdaten in Form von Anforderungen an und/oder Vorgaben für den Betrieb der Anlage, anlagenspezifische Rahmenbedingungen und/oder Spezifikationen ergänzt wird und mittels einer Datenverarbeitungseinrichtung durch automatische Auswertung des mit den Konfigurationsdaten ergänzten Fließschemas automatisch eine spezifische Projektierungslösung, für eine zusammen mit der projektierten Primärtechnik die verschiedenen Anforderungen erfüllende Sekundärtechnik erstellt wird, wobei in einem Archiv unterschiedliche Standard-Fließ¬schemata von Anlagen und/oder Anlagenteilen bereitgestellt werden, die zumindest teilweise mit einer oder mehreren Varianten von Standard-Konfigurationsdaten versehen sind,
- dass bei der automatischen Auswertung des erstellten Fließschemas durch Musterkennung ein passendes Stan-dard-Fließschema ermittelt wird, und
- dass die zu dem ermittelten passenden Standard-Fließschema gehörenden Standard-Konfigurationsdaten in dem erstellten Fließschema als Vorschlag zur Ergänzung der Fließschemas angezeigt werden.

Gegenstand der Erfindung ist ferner eine entsprechende Vorrichtung.

Entsprechend der Erfindung werden alle für eine automatische Projektierung einer Sekundärtechnik notwendigen Informationen wie z. B. die betrieblichen Anforderungen zum automatisierten und manuellen Anlagenbetrieb, die anlagenspezifischen Rahmenbedingungen und/oder die Spezifikationen als Teil einer erweiterten Anlagenplanung in einem entsprechend um diese Informationen (Konfigurationsdaten) erweiterten bzw. ergänzten Fließschema definiert.

Die Ergänzung des Fließschemas durch die Konfigurationsdaten erfolgt vorzugsweise in Form von Wirklinien zwischen grafischen Prozessobjekten des Fließbildes, Diagrammen und/oder standardisierten Tabellen, wobei die Konfigurationsdaten unmittelbar für die automatische Generierung der spezifischen Projektierungslösung ausgewertet werden können. So kann beispielsweise durch Eintragen einer Wirklinie zwischen einer Messstelle, z. B. Füllstandsmessstelle, und einer Komponente, z. B. Pumpe, in dem Fließschema vorgegeben werden, dass der Füllstand durch Verstellen der Pumpenleistung im Abfluss eines Behälters geregelt werden soll.

Die zu generierenden sekundärtechnischen Lösungen hängen nur von der erweiterten Anlagenplanung ab und können unabhängig von vordefinierten Strukturen wie z. B. vorgegebenen Standards erzeugt werden. Für die Automatisierungs-Software können beispielsweise beliebige Strukturen wie z. B. mehrdimensionale, logische Verknüpfungen, Ablaufsteuerungen, Umschaltlogiken, Regelungsstrukturen erzeugt werden. Mit dem erfindungsgemäßen Verfahren bzw. mit der erfindungsgemäßen Vorrichtung können auch sekundärtechnische Teillösungen, z. B. bei Änderungen an einer bestehenden Anlage, projektiert werden.

Die spezifische Projektierungslösung für die Sekundärtechnik wird anhand der Konfigurationsdaten in dem erstellten Fließschema und durch Zugriff auf sekundärtechnisches Wissen automatisch generiert. Bei dem sekundärtechnischen Wissen, das in einer Datenverarbeitungseinrichtung hinterlegt ist, kann es sich insbesondere um Basiswissen für die Erstellung von sekundärtechnischen Teillösungen handeln, die von der spezifischen Primärtechnik unabhängig sind, beispielsweise die Projektierung einer Regelungsstruktur bei durch die Konfigurationsdaten gegebener Führungsgröße, Regelgröße und Stellgröße. Daher ist eine Erzeugung von sekundärtechnischen Lösungen rein auf Basis der Informationen, die durch das Fließschema mit seinen Konfigurationsdaten zur Verfügung gestellt werden, d. h. ohne Verwendung von vorgefertigten Standardlösungen, möglich.

Bei der Generierung einzelner Projektierungslösungen wird auch auf ein Archiv zugegriffen. In diesem können Standard-Projektierungslösungen hinterlegt sein. Dies kann für die Bereiche gewünscht sein, in denen Lösungen von einer spezifischen Anlagenplanung praktisch unabhängig sind und die einmalige Definition eines allgemeingültigen Standards mit geringem Aufwand verbunden ist, wie z. B. die einmalige Definition der Verbindungstechnik zwischen einem Automatisierungsprozessor mit Ein-/ Ausgabe-Baugruppen. Ein anderer Anwendungsfall zur Verwendung eines Archivs für Standardlösungen ist die Definition von außergewöhnlichen Softwarestrukturen, die unter Einsatz menschlicher Intelligenz zur Lösung eines ganz bestimmten Problems dienen sollen.

In dem Archiv sind erfindungsgemäß unterschiedliche Standard-Fließschemata von Anlagen und/oder Anlagenteilen hinterlegt, die zumindest teilweise mit einer oder mehreren Varianten von Standard-Konfigurationsdaten versehen sind. Anhand des erstellten Fließschemas oder eines Teiles hiervon wird durch Musterkennung ein passendes Standard-Fließschema oder ein Teil hiervon ermittelt. Als Beispiel hierfür ist eine Teilanlage bestehend aus einer Pumpe, einem parallel geschalteten Mindestmengenventil, einem nachgeschalteten Absperrschieber sowie einer Druck- und einer Massenstrommessung genannt. Erfindungsgemäß wird eine derartige Teilanlage automatisch in einem Fließbild erkannt. Derartige Teilanlagen können aus wenigen Einzelkomponenten bestehen aber auch große Systeme bis hin zu einer kompletten Anlage umfassen.

Auf Basis der in einem Fließschema projektierten Primärtechnik und dem durch Mustererkennung zugeordneten Standard-Fließschema werden dann die betrieblichen Anforderungen, von denen es mehrere Varianten geben kann, dem Anlagenplaner als Vorschlag zur Ergänzung des von ihm erstellten Fließschemas angezeigt. Darüber hinaus wird auf Basis der in dem erstellten Fließschema enthaltenen Konfigurationsdaten eine passende Variante der Standard-Projektierungslösungen, die dem ermittelten Standard-Fließschema zugeordnet sind, ermittelt.

Die beschriebenen Weiterbildungen beziehen sich sowohl auf das erfindungsgemäße Verfahren als auch auf die Vorrichtung.

Soweit in der vorliegenden Anmeldung von Anlagen, Fließbildern und Lösungen die Rede ist, sind darunter auch einzelne selbständige oder miteinander verbundene (oder zu verbindende) Teil-Anlagen, Teil-Fließbilder und Teil-Lösungen zu verstehen.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt.

Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

In Figuren sind Ausführungsbeispiele der Erfindung dargestellt, welche im Weiteren näher erläutert werden.

Es zeigen, jeweils in vereinfachter schematischer Darstellung:
- FIG. 1: eine Vorrichtung zur Projektierung einer spezifischen verfahrenstechnischen Anlage,
- FIG. 2: ein Fließschema der Anlage und
- FIG. 3: eine Ergänzung des Fließschemas mit Konfigurationsdaten.

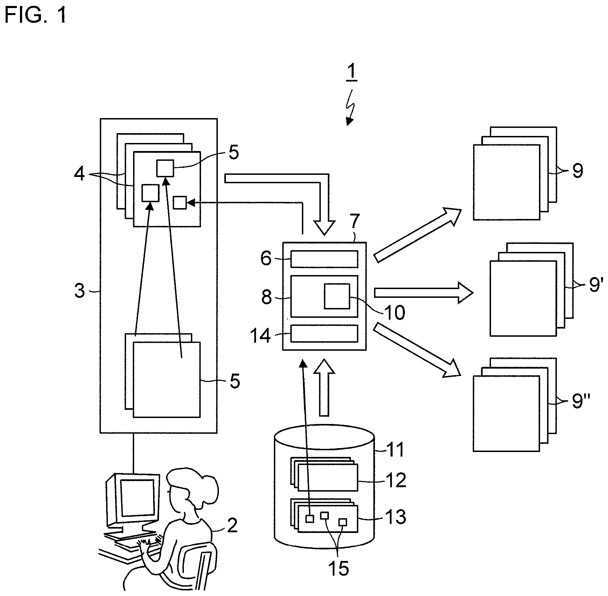

FIG. 1 zeigt eine Vorrichtung 1 zur Projektierung einer, hier nicht gezeigten, spezifischen verfahrenstechnischen Anlage die aus einer Primärtechnik in Form von miteinander verfahrenstechnisch verbundenen Komponenten der Anlage und mindestens einer von der Primärtechnik abhängigen und zusammen mit dieser einen Betrieb der Anlage ermöglichenden Sekundärtechnik, z. B. Automatisierungs-Software, Bedienung und Beobachtung der Anlage, Automatisierungs-Hardware und Elektrifizierung, besteht.

Die Primärtechnik wird projektiert, indem von einem Anwender 2 (Anlagenplaner, Technologe) mittels eines Anlagenplanungswerkzeugs 3 in bekannter Weise ein ggf. aus mehrere Teilbildern bestehendes Fließ- oder Rohrleitungsschema (R&I-Schema) 4 der Anlage durch Verknüpfung von die Komponenten der technischen Anlage repräsentierenden grafischen Prozessobjekten erstellt wird.

Mittels des Anlagenplanungswerkzeugs 3 ergänzt der Anwender 2 das Fließschema 4 um Konfigurationsdaten 5 in Form von Anforderungen an und/oder Vorgaben für den Betrieb der Anlage, anlagenspezifischen Rahmenbedingungen und/oder Spezifikationen.

Eine Auswerteeinheit 6 als Teil einer Datenverarbeitungseinrichtung 7 wertet das mit den Konfigurationsdaten 5 ergänzte Fließschema 4 aus. Eine Generiereinheit 8, die ebenfalls Teil der Datenverarbeitungseinrichtung 7 ist, erstellt darauf aufbauend automatisch eine spezifische Projektierungslösung 9, 9', 9" für eine zusammen mit der projektierten Primärtechnik die verschiedenen Anforderungen erfüllende Sekundärtechnik. Bei dem gezeigten Beispiel bezeichnet z. B. 9 eine Projektierungslösung für die Automatisierungs-Software, 9' eine Projektierungslösung für die Bedienung und Beobachtung der Anlage und 9" eine gemeinsame Projektierungslösung für die Automatisierungs-Hardware und Elektrifizierung.

In der Generiereinheit 8 ist sekundärtechnisches Wissen 10 hinterlegt, auf Basis dessen eine automatische Generierung der sekundärtechnischen Lösungen 9, 9', 9" allein auf der Grundlage der Fließschemata 4 mit den Konfigurationsdaten 5 möglich ist. Die Generiereinheit 8 greift erfindungsgemäß auf ein Archiv 11 mit Standard-Projektierungslösungen 12 zu, um die sekundärtechnischen Lösungen 9, 9', 9" in Anlehnung an die Standardlösungen 12 zu erzeugen.

Das Archiv 11, das ggf. mehrere verteilte Datenbanken umfasst, enthält unterschiedliche Standard-Fließschemata 13 von Anlagen und/oder Anlagenteilen, denen die Standard-Projektierungslösungen 12 zugeordnet sind. In einer Einheit zur Musterkennung 14, die Teil der Datenverarbeitungseinrichtung 7 ist, wird ein Standard-Fließschema 13, das zu dem Fließschema 4 oder einem Teil davon passt, ermittelt. Anhand der in dem erstellten Fließschema 4 enthaltenen Konfigurationsdaten 5 werden schließlich für das so ermittelte Standard-Fließschema 13 eine oder mehrere passende Standard-Projektierungslösungen 12 ermittelt und dem Anwender 2 zur Auswahl angezeigt.

Die Standard-Fließschemata 13 enthalten weiterhin eine oder mehrere Varianten von Standard-Konfigurationsdaten 15, mit denen das bei der Projektierung der Primärtechnik erstellte Fließschema 4 ergänzt wird. Liegt ein noch nicht oder lückenhaft konfiguriertes Fließschema 4 vor, wird über die Einheit zur Musterkennung 14 automatisch geprüft, ob entsprechende Teilsysteme oder Anlagenteile in dem Archiv 11 bereits durch dort vorhandene, fertig konfigurierte Standard-Fließschemata 13 beschrieben sind. Ist dies der Fall, werden die bereits definierten Varianten von Konfigurationsdaten 15 dem Anwender 2 zur Auswahl angezeigt. In diesem Fall müssen von dem Anwender 2 keine über die Anlagenplanung hinausgehenden Tätigkeiten durchgeführt werden, solange die vorhandenen Standard-Konfigurationsdaten auch für seine Anlage zutreffend sind.

Aus Anwendersicht findet nur noch eine Anlagenplanung statt, d. h. die Projektierung der Primärtechnik der Anlage, die in einem Konfigurationsschritt um die Informationen angereichert wird, die für eine automatische Generierung aller spezifischen Projektierungslösungen der Sekundärtechnik benötigt werden.

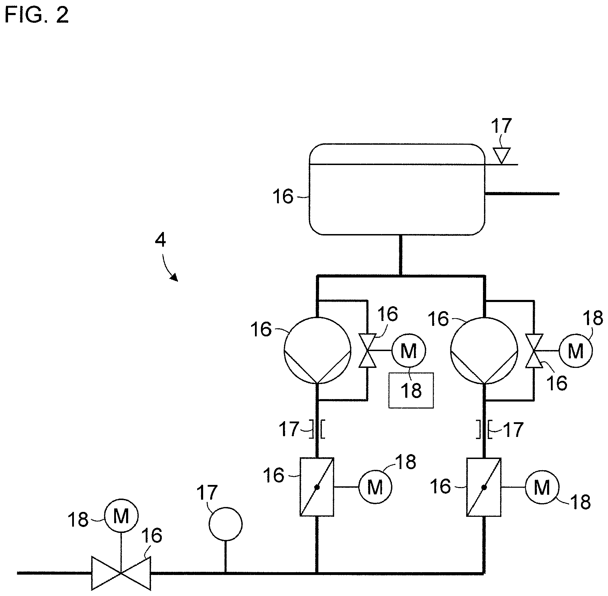

FIG. 2 zeigt ein vereinfachtes Beispiel für das im Rahmen der Anlagenplanung projektierte Fließschema 4. Das Fließschema 4 enthält grafische Prozessobjekte 16, die unterschiedliche Komponenten der Anlage, wie Pumpen, Behälter, Ventile repräsentieren und entsprechend der Verrohrung der Anlage miteinander verknüpft sind. Die Prozessobjekte 16 enthalten technische Informationen über die Parameter der von ihnen repräsentierten Komponenten, wie z. B. Rohrleitungsdurchmesser oder Füllvolumen eines Behälters. Das hier gezeigte Fließschema 4 enthält auch die Sensorik 17 und Aktorik 18 der Anlage mit den entsprechenden technischen Informationen, anhand derer die Software für das Einlesen von Messsignalen und die Ausgabe von Stellsignalen automatisch generiert werden kann.

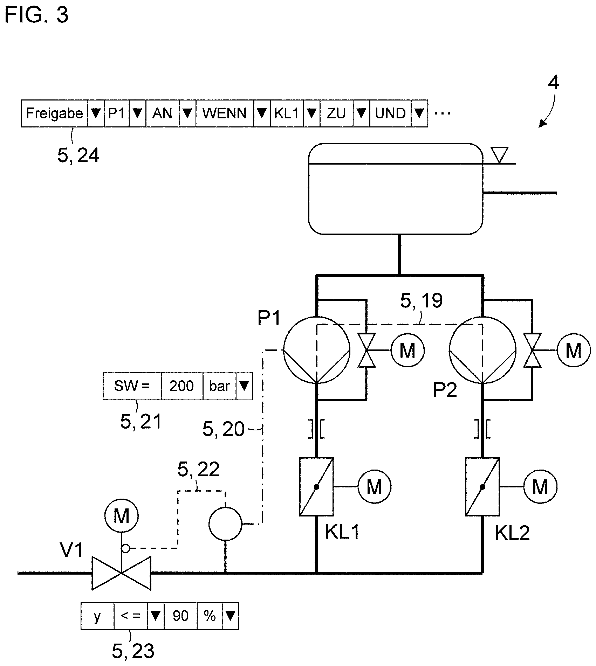

Im Folgenden wird anhand von FIG. 3 beispielhaft erläutert, wie die zusätzlichen Informationen bzw. Konfigurationsdaten 5 zur automatischen Generierung einer Sekundärtechnik der Anlagenplanung hinzugefügt werden können. Sowohl die aufgeführten Konfigurationsdaten als auch die Art und Weise, wie diese in das Fließschema 4 eingegeben werden können, sind nur zur besseren Erläuterung aufgeführt und beispielhaft zu verstehen und sind nicht als Einschränkung der Erfindung zu verstehen.

FIG. 3 zeigt das Fließschema 4 aus FIG. 2, das nach Eingabe entsprechender Konfigurationsdaten 5 weitere Informationen enthält, die zum Generieren von Sekundärtechniken benötigt werden. Diese Informationen sind aus rein technologischer Sicht angegeben, d. h. der Bearbeiter 2 gibt z. B. lediglich vor, wie die Anlage im automatischen Betrieb gefahren werden soll, ohne dass er die Hintergründe eines Automatisierungssystems kennen oder Wissen über den Aufbau von regelungs- oder steuerungstechnischen Funktionen haben muss. Derartige Angaben müssen ohnehin durch den Anlagenplaner 2 zur Verfügung gestellt werden. Dieser kann nun die entsprechenden Informationen direkt in das Fließschema 4 eintragen. Die Umsetzung dieser Vorgaben in eine Sekundärtechnik wie z. B. die Software eines Automatisierungssystems, also das Automatisierungs-Engineering, kann dann automatisch in der digitalen Systemumgebung erfolgen.

Zu den Konfigurationsdaten 5, die hierbei anzugeben sind, gehören:
Redundanz- oder Bereichsaufspaltungs-Wirklinien 19 zur Angabe, welche Aggregate redundant zueinander sind oder ergänzend in verschiedenen Stellbereichen arbeiten. Beispiel: Zwei Pumpen P1, P2 sind redundant zueinander und werden parallel betrieben, falls beide Pumpen P1, P2 laufen.

Regelungs-Wirklinien 20 zur Angabe, welche Messgröße (Regelgröße) durch welchen Aktor (Stellglied) geregelt wird. Beispiel: Der Druck in der Leitung wird mit der Pumpe P1 geregelt. Da im Beispiel die Pumpen P1 und P2 als redundant zueinander definiert sind, zeigt die Wirklinie 20 gleichzeitig an, dass der Druck mit der Pumpe P2 geregelt wird, falls die Pumpe P1 nicht läuft, und dass beide Pumpen P1, P2 gemeinsam den Druck regeln, falls beide Pumpen laufen.

Sollwertvorgaben 21 zu den Regelungswirklinien 20, wobei vom Anwender 2 Werte eingegeben und Einheiten aus einem Menü ausgewählt werden können.

Begrenzungs-Wirklinien 22 zur Angabe, welche Messgrößen die Regelung von welchen Regelgrößen begrenzen. Beispiel: Der Druck in der Leitung muss so eingestellt werden, dass das Ventil V1, welches den Massendurchfluss regelt, nicht an die Grenzen seines Stellbereiches kommt.

Grenzwertvorgaben 23 zu den Begrenzungswirklinien, wobei vom Anwender 2 Werte eingegeben und Vergleichsoperanden und Einheiten aus entsprechenden Menüs ausgewählt werden können.

Logikvorgaben 24 aus technologischer Sicht, wobei der Anwender 2 die Bausteine der Logikvorgabe aus entsprechenden Menüs auswählen kann. Beispiel: Die Pumpe P1 kann nur eingeschaltet werden, wenn die Klappe KL1 geschlossen ist.

Weitere Beispiele für Konfigurationsdaten 5, die im Fließschema 4 angegeben werden können, sind Störungs-Wirklinien der Regelungstechnik, Angaben zum automatischen An- und Abfahren der Anlage wie Zu- und Abschaltreihenfolgen von Aggregaten, Parameter, die die Sekundärtechnik beeinflussen, wie z. B. Kennlinien von Aggregaten, Laufzeiten von Ventilen, Stromaufnahme von Antrieben, Kennzeichnungen von Objekten, die auf einem Bedienbild dargestellt werden sollen, Kennzeichnung von Informationen, die dem Anlagenfahrer zur Verfügung gestellt werden sollen, wie z. B. Signale für Kurvenbilder, Alarme, anlagenspezifische Rahmenbedingungen, wie z. B. räumliche Gegebenheiten, Entfernungen, Spezifikationen, wie z. B. einzusetzende Produkte, Eigenschaften der zu verwendenden Produkte.

Zu beachten ist hierbei, dass diese Informationen 5 grundsätzlich vom Anlagenplaner 2 vorzugeben sind. Entsprechend der vorliegenden Erfindung können diese Vorgaben in einem integrierten System 1 gemacht werden, und weitere Arbeitsschritte zur Projektierung der Sekundärtechnik sind danach nicht mehr notwendig.

Bestimmte Konfigurationsdaten 5 können dabei eine Auswirkung auf mehrere Bereiche der Sekundärtechnik haben. Beispielweise hat die Angabe, dass zwei Pumpen redundant zueinander sind, u. a. Auswirkungen auf die Regelungs- und die Steuerungsstrukturen der beiden Pumpen, auf die Belegung der Ein- Ausgabebaugruppen der Automatisierungshardware, auf die Auslegung und Belegung der Stromschienen in der Elektrifizierung, auf die Informationsaufbereitung und Gestaltung der Bedienmöglichkeiten für den Anlagenfahrer.

## Patentansprüche

1. Verfahren zur Projektierung einer spezifischen verfahrenstechnischen Anlage, die aus einer Primärtechnik in Form von miteinander verfahrenstechnisch verbundenen Komponenten der Anlage und mindestens einer von der Primärtechnik abhängigen und zusammen mit dieser einen Betrieb der Anlage ermöglichenden Sekundärtechnik besteht, wobei
- die Primärtechnik projektiert wird, indem mittels eines Anlagenplanungswerkzeugs (3) ein Fließschema (4) der Anlage durch Verknüpfung von die Komponenten der technischen Anlage repräsentierenden grafischen Prozessobjekten (16) erstellt wird,
- mittels des Anlagenplanungswerkzeugs (3) das Fließschema (4) um Konfigurationsdaten (5) in Form von Anforderungen an und/oder Vorgaben für den Betrieb der Anlage, anlagenspezifische Rahmenbedingungen und/oder Spezifikationen ergänzt wird, und
- mittels einer Datenverarbeitungseinrichtung (7) durch automatische Auswertung des mit den Konfigurationsdaten (5) ergänzten Fließschemas (4) automatisch eine spezifische Projektierungslösung (9, 9', 9") für eine zusammen mit der projektierten Primärtechnik die verschiedenen Anforderungen erfüllende Sekundärtechnik erstellt wird
**dadurch gekennzeichnet,**
- **dass** in einem Archiv (11) unterschiedliche Standard-Fließschemata (13) von Anlagen und/oder Anlagenteilen bereitgestellt werden, die zumindest teilweise mit einer oder mehreren Varianten von Standard-Konfigurationsdaten (15) versehen sind,
- **dass** bei der automatischen Auswertung des erstellten Fließschemas (4) durch Musterkennung ein passendes Standard-Fließschema (13) ermittelt wird, und
- **dass** die zu dem ermittelten passenden Standard-Fließschema (13) gehörenden Standard-Konfigurationsdaten (15) in dem erstellten Fließschema (4) als Vorschlag zur Ergänzung der Fließschemas (4) angezeigt werden.

2. Verfahren nach Anspruch 1, **dadurch gekennzeichnet, dass** die zu projektierende Sekundärtechnik die Automatisierungs-Software, Automatisierungs-Hardware, Bedienung & Beobachtung und/oder Elektrifizierung der Anlage umfasst.

3. Verfahren nach Anspruch 1 oder 2, **dadurch gekennzeichnet, dass** die Ergänzung des Fließschemas (4) durch die Konfigurationsdaten (5) in Form von standardisierten Tabellen (24), Diagrammen und/oder Wirklinien (19, 20, 21, 22, 23) zwischen grafischen Prozessobjekten (16) erfolgt.

4. Verfahren nach einem der vorangehenden Ansprüche, **dadurch gekennzeichnet, dass** die Datenverarbeitungseinrichtung (7) die spezifische Projektierungslösung (9, 9', 9") für die Sekundärtechnik anhand der Konfigurationsdaten (5) in dem erstellten Fließschema (4) und durch Zugriff auf sekundärtechnisches Wissen (10) automatisch generiert.

5. Verfahren nach einem der vorangehenden Ansprüche, **dadurch gekennzeichnet, dass** die Datenverarbeitungseinrichtung (7) die spezifische Projektierungslösung (9, 9', 9") für die Sekundärtechnik anhand der Konfigurationsdaten (5) in dem erstellten Fließschema (4) und durch Zugriff auf in einem Archiv (11) bereitgestellte Standard-Projektierungslösungen (12) automatisch generiert.

6. Verfahren nach Anspruch 5, **dadurch gekennzeichnet, dass** die Standard-Projektierungslösungen (12) in Form von Gesamtlösungen und/oder Teillösungen in unterschiedlichen Varianten bereitgestellt werden.

7. Verfahren nach Anspruch 6, **dadurch gekennzeichnet,**
**dass** in dem Archiv (11) die unterschiedlichen Standard-Fließschemata (13) von Anlagen und/oder Anlagenteilen zusammen mit zugeordneten Varianten von Standard-Projektierungslösungen (12) bereitgestellt werden, und
**dass** anhand der in dem erstellten Fließschema (4) enthaltenen Konfigurationsdaten (5) eine passende Variante aus den dem ermittelten Standard-Fließschema (13) zugeordneten Varianten von Standard-Projektierungslösungen (12) ermittelt wird.

8. Vorrichtung (1) zur Projektierung einer spezifischen verfahrenstechnischen Anlage, die aus einer Primärtechnik in Form von miteinander verfahrenstechnisch verbundenen Komponenten der Anlage und mindestens einer von der Primärtechnik abhängigen und zusammen mit dieser einen Betrieb der Anlage ermöglichenden Sekundärtechnik besteht,
mit einem Anlagenplanungswerkzeug (3), das eine spezifische Projektierungsunterlage der Primärtechnik in Form eines Fließschemas (4) der Anlage enthält, das um Konfigurationsdaten (5) in Form von Anforderungen an und/oder Vorgaben für den Betrieb der Anlage, anlagenspezifische Rahmenbedingungen und/oder Spezifikationen ergänzt ist, und
mit einer Datenverarbeitungseinrichtung (7), die mit einem Archiv (11) verbunden ist, in welchem unterschiedliche Standard-Fließschemata (13) von Anlagen und/oder Anlagenteilen bereitgestellt werden, die zumindest teilweise mit einer oder mehreren Varianten von Standard-Konfigurationsdaten (15) versehen sind,
wobei die Datenverarbeitungseinrichtung (7) dazu ausgebildet ist, durch automatische Auswertung des mit den Konfigurationsdaten (5) ergänzten Fließschemas (4) automatisch eine spezifische Projektierungslösung (9, 9', 9") für eine zusammen mit der projektierten Primärtechnik die verschiedenen Anforderungen erfüllende Sekundärtechnik zu erstellen,
indem durch Musterkennung ein passendes Standard-Fließschema (12) aus dem Archiv (11) ermittelt wird, und
- dass die zu dem ermittelten passenden Standard-Fließschema (12) gehörenden Standard-Konfigurationsdaten (15) in dem erstellten Fließschema (4) als Vorschlag zur Ergänzung der Fließschemas (4) angezeigt werden.

9. Verwendung der Vorrichtung (1) nach Anspruch 8 zur Durchführung des Verfahrens nach einem der Ansprüche 1 bis 7.

## Claims

1. Method for project planning of a specific process system, which consists of a primary technology in the form of components of the system connected to one another using process technology and at least one secondary technology dependent on the primary technology and together therewith permitting operation of the system, wherein
- the primary technology is project-planned in that a flow diagram (4) of the system is created using a system planning tool (3) by linking graphical process objects (16) representing the components of the technical system,
- using the system planning tool (3) the flow diagram (4) is supplemented by configuration data (5) in the form of requirements and/or specifications for the operation of the system, system-specific framework conditions and/or specifications and
- using a data processing device (7), a specific project planning solution (9, 9', 9'') is automatically created for a secondary technology which fulfils the various requirements, together with the project-planned primary technology, by automatically evaluating the flow diagram (4) supplemented with the configuration data (5)
**characterised in that**
- different standard flow diagrams (13) of systems and/or system parts are provided in an archive (11), which are at least partially provided with one or more variants of standard configuration data (15),
- during the automatic evaluation of the flow diagram (4) created, an appropriate standard flow diagram (13) is determined using pattern recognition and
- the standard configuration data (15) belonging to the determined appropriate standard flow diagram (13) is displayed in the flow diagram (4) created as a suggestion for supplementing the flow diagram (4).

2. Method according to claim 1, **characterised in that** the secondary technology to be project-planned comprises the automation software, automation hardware, operation & monitoring and/or electrification of the system.

3. Method according to claim 1 or 2, **characterised in that** the flow diagram (4) is supplemented by the configuration data (5) in the form of standardised tables (24), diagrams and/or active lines (19, 20, 21, 22, 23) between graphical process objects (16).

4. Method according to one of the preceding claims, **characterised in that** the data processing device (7) automatically generates the specific project planning solution (9, 9', 9'') for the secondary technology on the basis of the configuration data (5) in the flow diagram (4) created and by accessing secondary technology knowledge (10).

5. Method according to one of the preceding claims, **characterised in that** the data processing device (7) automatically generates the specific project planning solution (9, 9', 9'') for the secondary technology on the basis of the configuration data (5) in the flow diagram (4) created and by accessing standard project planning solutions (12) provided in an archive (11).

6. Method according to claim 5, **characterised in that** the standard project planning solutions (12) are provided in different variants in the form of total solutions and/or partial solutions.

7. Method according to claim 6, **characterised in that**
the different standard flow diagrams (13) of systems and/or system parts together with associated variants of standard project planning solutions (12) are provided in the archive (11), and
on the basis of the configuration data (5) contained in the flow diagram (4) created, an appropriate variant is determined from variants of standard project planning solutions (12) associated with the determined standard flow diagram (13).

8. Device (1) for project planning of a specific process system, which consists of a primary technology in the form of components of the system connected to one another using process technology and at least one secondary technology that is dependent on the primary technology and enables operation of the system together therewith,
with a system planning tool (3) that contains a specific project planning document of the primary technology in the form of a flow diagram (4) of the system, which is supplemented by configuration data (5) in the form of requirements and/or specifications for the operation of the system, system-specific framework conditions and/or specifications, and
with a data processing device (7) that is connected to an archive (11), in which different standard flow diagrams (13) of systems and/or system parts are provided, which are at least partially provided with one or more variants of standard configuration data (15),
wherein the data processing device (7) is designed to automatically create a specific project planning solution (9, 9', 9'') for a secondary technology that fulfils the various requirements, together with the project-planned primary technology, by automatically evaluating the flow diagram (4) supplemented with the configuration data (5),
by an appropriate standard flow diagram (12) being determined from the archive (11) using pattern recognition and
- that the standard configuration data (15) belonging to the determined appropriate standard flow diagram (12) is displayed in the flow diagram (4) created as a suggestion for supplementing the flow diagram (4).

9. Use of the device (1) according to claim 8 for carrying out the method according to one of claims 1 to 7

## Revendications

1. Procédé de planification d'une installation spécifique d'ingénierie de processus, qui est constituée d'une technique primaire sous la forme de composants de l'installation reliés entre eux en ingénierie de processus et d'au moins une technique secondaire, qui dépend de la technique primaire et qui rend possible, ensemble avec celle-ci, un fonctionnement de l'installation, dans lequel
- on planifie la technique primaire en établissant, au moyen d'un outil (3) de planification d'installation, un schéma (4) fonctionnel de l'installation par combinaison d'objets (16) de processus graphiques représentant les composants de l'installation technique,
- au moyen de l'outil (3) de planification d'installation, on complète le schéma (4) fonctionnel de données (5) de configuration sous la forme d'exigences et/ou de prescriptions pour le fonctionnement de l'installation, de conditions aux limites spécifiques à l'installation et/ou de spécifications, et
- au moyen d'un dispositif (7) de traitement de données, on établit, par évaluation automatique du schéma (4) fonctionnel complété par les données (5) de configuration, automatiquement une solution (9, 9', 9'') spécifique de planification pour une technique secondaire satisfaisant, ensemble avec la technique primaire planifiée, les diverses exigences,
**caractérisé**
- **en ce que** l'on se procure, dans une archive (11), des schémas (13) fonctionnels standards différents d'installation et/ou de parties d'installation, qui sont pourvus au moins en partie d'une ou de plusieurs variantes de données (15) de configuration standard,
- **en ce que**, lors de l'évaluation automatique du schéma (4) fonctionnel établi, on détermine, par reconnaissance de modèle, un schéma (13) fonctionnel standard convenable, et
- **en ce que** l'on indique, comme proposition pour compléter le schéma (4) fonctionnel, dans le schéma (4) fonctionnel établi, les données (15) de configuration standard appartenant au schéma (13) fonctionnel standard convenable déterminé.

2. Procédé suivant la revendication 1, **caractérisé en ce que** la technique secondaire à planifier comprend le logiciel d'automatisation, le matériel d'automatisation, le contrôle commande et/ou l'électrification de l'installation.

3. Procédé suivant la revendication 1 ou 2, **caractérisé en ce que** compléter le schéma (4) fonctionnel par les données (5) de configuration s'effectue sous la forme de tables (24), de diagrammes et/ou de lignes (19, 20, 21, 22, 23) actives entre des objets (16) de processus graphiques.

4. Procédé suivant l'une des revendications précédentes, **caractérisé en ce que** le dispositif (7) de traitement de données crée automatiquement la solution (9, 9', 9") spécifique de planification pour la technique secondaire à l'aide des données (5) de configuration dans le schéma (4) fonctionnel établi et par accès à des savoirs (10) de technique secondaire.

5. Procédé suivant l'une des revendications précédentes, **caractérisé en ce que** le dispositif (7) de traitement de données crée automatiquement la solution (9, 9', 9") spécifique de planification pour la technique secondaire à l'aide des données (5) de configuration dans le schéma (4) fonctionnel établi et par accès des solutions (12) de planification standard mises dans une archive (11).

6. Procédé suivant la revendication 5, **caractérisé en ce que** l'on se procure, en des variantes différentes, les solutions (12) de planification standard sous la forme de solutions d'ensemble et/ou de solutions partielles.

7. Procédé suivant la revendication 6, **caractérisé**
**en ce que** l'on se procure, dans l'archive (11), les différents schémas (13) fonctionnels standards d'installation et/ou de parties d'installation ensemble avec des variantes associées de solutions (12) de planification standard, et
**en ce que**, à l'aide des données (5) de configuration contenues dans le schéma (4) fonctionnel établi, on détermine une variante convenable à partir des variantes, associées aux schémas (13) fonctionnel standard déterminés, de solutions (12) de planification standard.

8. Installation (1) de planification d'une installation spécifique d'ingénierie de processus, qui est constituée d'une technique primaire sous la forme de composants de l'installation reliés entre eux en ingénierie de processus et d'au moins une technique secondaire, qui dépend de la technique primaire et qui rend possible, ensemble avec celle-ci, un fonctionnement de l'installation,
comprenant un outil (3) de planification d'installation, qui contient une base spécifique de planification de la technique primaire sous la forme d'un schéma (4) fonctionnel de l'installation, qui est complété de données (5) de configuration sous la forme d'exigences et/ou de prescriptions pour le fonctionnement de l'installation, de conditions aux limites spécifiques à l'installation et/ou des spécifications, et
comprenant un dispositif (7) de traitement de données, qui communique avec une archive (11), dans laquelle on dispose de différents schémas (13) de fonctionnement standard d'installation et/ou de parties d'installation, qui sont pourvus au moins en partie d'une ou de plusieurs variantes de données (15) de configuration standard,
dans laquelle le dispositif (7) de traitement de données est constitué pour établir, par évaluation automatique du schéma (4) fonctionnel complété par les données (5) de configuration, automatiquement une solution (9, 9', 9'') spécifique de planification pour une technique secondaire satisfaisant, ensemble avec la technique primaire planifiée, les diverses exigences,
par le fait que l'on détermine dans l'archive (11), par reconnaissance de modèle, un schéma (12) fonctionnel standard convenable, et
- en ce que l'on indique, comme proposition pour compléter le schéma (4) fonctionnel, dans le schéma (4) de circulation établi, les données (15) de configuration standard appartenant au schéma (12) fonctionnel standard convenable déterminé.

9. Utilisation de l'installation (1) suivant la revendication 8 pour effectuer le procédé suivant l'une des revendications 1 à 7.
